# EUROPEAN PATENT SPECIFICATION

(11) **EP 1 205 444 B1**
(45) Date of publication and mention of the grant of the patent: **24.11.2004**
(21) Application number: 00903702.9
(22) Date of filing: 11.02.2000
(51) Int. Cl.: C02F 11/12

(54) **RECOVERY AND UTILIZATION OF THE SLUDGES CONTAINED IN WASTE WATERS FROM THE CERAMIC INDUSTRY**
WIEDERGEWINNUNG UND VERWENDUNG VON IM ABWASSER DER KERAMIKINDUSTRIE ENTHALTENEN SCHLÄMMEN
RECUPERATION ET UTILISATION DES BOUES CONTENUES DANS LES EAUX RESIDUELLES DE L'INDUSTRIE DE LA CERAMIQUE

(30) Priority: 05.03.1999 ES 9900455
(43) Date of publication of application: 15.05.2002
(73) Proprietor: Gestion Ceramica Ecologica, S.L., 28032 Madrid (ES)
(72) Inventor: FORTUNO GOTERRIS, Manuel, E-12540 Villarreal (ES)
(74) Representative: Carpintero Lopez, Francisco
(86) International application number: PCT/ES2000/000046
(87) International publication number: WO 2000/053535

(56) References cited:
- WO-A-95/18946
- ES-A- 2 116 913
- US-A- 5 426 866
- DATABASE WPI Week 199834, Derwent Publications Ltd., London, GB; AN 1998-391853, XP002966224 & JP 10 156 392 A (TAIHEI SANGYO KK) 16 June 1998
- DATABASE WPI Week 198443, Derwent Publications Ltd., London, GB; AN 1984-268985, XP002966225 & SU 1 079 625 A (CEMENT IND RES INST) 15 March 1984

## Description

### TECHNICAL FIELD

The present invention relates to the ceramic sector

### BACKGROUND OF THE INVENTION

The incorporation of enamel residues in liquid state into bases and varnishes is known. Also known is the importance of solid residues from tiles in the preparation of clay compositions for the manufacture of the ceramic support and, recently, the incorporation of residual waters in the process of milling for the manufacture of ceramic pastes, but always in low concentrations, given the high content of contaminants, both solid and liquid, and the irregularity of their characterisation.

### DESCRIPTION OF THE INVENTION

In all the processes of manufacture of ceramic floor tiles, residual muds are generated. These muds and their correct elimination are currently one of the most important environmental problems connected with the manufacture of ceramic floor tiles as, in the Spanish ceramic sector, no installations are available that are able to satisfactorily eliminate these residues.

The residual waters derived from a process of manufacture and enamelling of ceramic floor tiles usually have a series of common characteristics:

They contain metals from line cleaning and milling, such as boron, aluminium, lead, iron and zinc.

They have a large amount of solid in suspension, mostly consisting of clay materials and remains of frits.

They have dissolved salts such as sulphates, chlorides and fluorides.

If we carry out a characterisation by chemical analysis of the residual waters from a process of enamelling ceramic pieces, with no purification treatment, and we compare the results with the indicative characterisation of the main base frits, we obtain total compatibility.

Therefore it can be stated that the muds derived from the manufacture of enamelled ceramic floor tiles are formed mainly from remains of enamel. These muds will obviously have a chemical composition similar to that of the enamels currently in use, in addition being constituted fundamentally of a vitreous phase, with the presence of zirconium silicate and quartz as crystalline phases.

Similarly, a varnish can be defined as an earthy composition which can be vitrified sufficiently to allow binding to the support and which is not porous.

This composition is generally used for covering the effects produced by the degassing of volatile substances such as CO₂ or SO₂ from the support or for preventing the contaminating substance present in the support from contaminating the enamel applied over it.

With the aim of generalising the utilisation of these residues and not limiting use thereof because of their irregularity in the content of the components or the high content of volatile substances and undesirable solids, the holder of the present invention developed a procedure by which the ceramic muds contained in the residual waters of the ceramic companies can be manipulated and used in the manufacture of enamels such as those used in pastes. The vitrifying or production of new ceramic materials from residues constitutes a competitive technology that not only reduces the volume that a residue occupies making it inert, but also this process can convert them into a marketable product.

Thus, the present application relates to a process for the preparation of a product which can be employed as raw material in the formulation of and incorporation thereof into enamels, varnishes, frits or caramic pastes, which comprises:
a) preparation of an homogeneous suspension of the muds contained in residual waters of the ceramic industry, said residual waters containing remains of enamels and varnishes or frits; and
b) atomisation of said suspension.

The preparation of a suspension of the muds contained in residual waters comprises the following steps:
a) continuous agitation in tanks, in order suspend the mud particles
b) decantation of the suspension, and
c) sieving of the muds contained in the suspension obtained in b)

The process consists of submitting the residual waters from the ceramic industry to a homogenisation process through continual agitation in tanks, proceeding at the same time to a deodorising by means of the application of air. Once homogeneity has been achieved, the mixture is concentrated by decantation to then be atomised with optimum yields. The atomisation operation begins with the screening of the water-muds suspension, with the aim of eliminating undesirable particles formed both by impurities and by excessively reactive particles; this screened suspension is transferred by pumps to the inside of the atomiser, where a double operation is effected, on the one hand the evaporation of water and volatiles and on the other the concentration of the minute solid particles contained in the suspension in spherical and hollow granules that are precipitated in the form of powder and stored to then be used as an integral part of the formulation of varnishes and frits or as an ingredient in the preparation of pastes.

The product obtainable by the process mentioned above can be used a raw material in the formulation and incorporation thereof into enamels, varnishes or frits, and in the formulation and incorporation thereof into ceramic pastes.

### EMBODIMENT AND INDUSTRIAL APPLICATION

We proceed with residual waters originating from the processes of manufacture of ceramic floor tiles, with high contents of solid material in suspension, mainly clay minerals and frits. These residues are transported in approved bins to the processing plant, where the residues are deposited in tanks with enough capacity to allow as homogeneous mixture as possible to be obtained and guaranteeing at the same time a regular feed to the atomisation installation. These tanks are equipped with an agitation system with the aim of achieving greater homogeneity of the suspension through an aeration system consisting of diffusers that also agitate the waters, favouring the aeration thereof, thus attaining a better oxidation of the organic material and the oxidisable compounds. This reduces the problems derived from putrefaction of the waters. Later, a concentration process is carried out by means of coagulation and sufficient sedimentation as most of the metals are found in colloidal form and it is difficult to precipitate them out. This equilibrium is broken through the addition of coagulants. This operation is necessary to achieve optimum yields in the atomisation process from the energetic point of view, as the resulting muds can be processed in controlled fashion. The next operation consists of screening these muds using vibrating sieves with a large enough clearance to allow retention of the impurities still present in said muds, both from the qualitative and quantitative point of view. The muds, once clean of impurities are injected using reciprocating pumps or diaphragm pumps into the drying chamber of the atomiser and they are pulverised using double-flow small-diameter nozzles. The diffusive fluid is dried by injection of hot air. The water evaporated in the process is submitted to a treatment of damp dusting with a view to guaranteeing that the emissions of solid particles to the atmosphere are lower than the those permitted. The finished product is a powder composed of hollow granules of the composition already indicated, suitable for integration into the formulation of varnishes and frits, given their purity and homogeneity, in proportions that will depend on the conditions required for these materials.

## Claims

1. Process for the preparation of a product which can be employed as raw material in the formulation of and incorporation thereof into enamels, varnishes, frits or caramic pastes, which comprises:
a) preparation of an homogeneous suspension of the muds contained in residual waters of the ceramic industry, said residual waters containing remains of enamels, varnishes and frits; and
b) atomisation of said suspension.

2. Process according to claim 1 wherein the preparation of an homogeneous suspension of the muds contained in residual waters comprises the following steps:
a) continuous agitation in tanks, in order to suspend the mud particles
b) decantation of the suspension, and
c) sieving of the muds contained in the suspension obtained in b)

3. Process according to claims 1 and 2 which comprises the following steps:
a) continuous agitation in tanks, in order to supend the mud particles
b) decantation of the residual waters,
c) sieving of the muds contained in the suspension obtained in b), and
d) atomisation of the suspension obtained in c).

4. Process according to claims 2 and 3, wherein the agitation of step a) is produced by means of an aeration system consisting of diffusers.

5. Product obtainable by the processes defined in claims 1-4.

6. Use of the product obtainable by the process defined in claims 1-4 as a raw material in the formulation and incorporation thereof into enamels, varnishes or frits.

7. Use of the product obtainable by the process defined in claims 1-4 as a raw material in the formulation and incorporation thereof into ceramic pastes.

## Patentansprüche

1. Verfahren zur Herstellung eines Produkts, das als Rohmaterial in der Rezeptur und Herstellung von Lackfarben, Lacken, Fritten oder Keramikpaste eingesetzt werden kann, das Folgendes umfasst:
a) Herstellung einer homogenen Suspension der Schlämme, die in Abwässern der Keramikindustrie enthalten sind, wobei besagte Abwässer Reste von Lackfarben, Lacken und Fritten enthalten; und
b) Atomisierung besagter Suspension.

2. Verfahren gemäss Anspruch 1, wobei die Herstellung einer homogenen Suspension der Schlämme, die in Abwässern enthalten sind, folgende Schritte umfasst:
a) fortwährendes Rühren in Tanks, um die Schlammpartikel aufzulösen
b) Dekantierung der Suspension, und
c) Sieben der Schlämme, die in der Suspension enthalten sind, die in b) erhalten wurde.

3. Verfahren gemäss den Ansprüchen 1 und 2, das folgende Schritte umfasst:
a) fortwährendes Rühren in Tanks, um die Schlammpartikel aufzulösen
b) Dekantierung der Abwässern, und
c) Sieben der Schlämme, die in der Suspension enthalten sind, die in b) erhalten
d) Atomisierung der in c) erhaltenenen Suspension

4. Verfahren gemäss den Ansprüchen 2 und 3, wobei das Rühren des Schritts a) mittels eines Belüftungssystems durchgeführt wird, das aus Zerstäubern besteht.

5. Produkt, das mittels der Verfahren der Ansprüche 1 - 4 hergestellt wird.

6. Verwendung des Produkts, das mittels des Verfahrens der Ansprüche 1-4 hergestellt wird zur Rezeptur und Herstellung von Lackfarben, Lacken oder Fritten.

7. Verwendung des Produkts, das mittels des Verfahrens der Ansprüche 1-4 hergestellt wird zur Rezeptur und Herstellung von Keramikpasten.

## Revendications

1. Procédé pour la préparation d'un produit pouvant être employé comme matière première pour sa formulation et son incorporation dans des émaux, des vernis, des frittes ou des pâtes céramiques qui comprennent:
a) la préparation d'une suspension homogène des boues contenues dans les eaux résiduaires de l'industrie céramique, lesdites eaux résiduaires contenant des déchets d'émaux, de vernis et de frittes; et
b) atomisation de ladite suspension

2. Procédé selon la revendication 1 dans laquelle la préparation d'une suspension homogène des boues contenues dans les eaux résiduaires comprend les étapes suivantes :
a) agitation continue dans des réservoirs, afin de suspendre les particules de boue,
b) décantation de la suspension, et
c) tamisage des boues contenues dans la suspension obtenue à b).

3. Procédé selon les revendications 1 et 2 qui comprend les étapes suivantes :
a) agitation continue dans des réservoirs, afin de suspendre les particules de boue,
b) décantation des eaux résiduaires,
c) tamisage des boues contenues dans la suspension obtenue à b) et,
d) atomisation de la suspension obtenue à c).

4. Procédé selon les revendications 2 et 3, dans lequel l'agitation de l'étape a) est produite au moyen d'un système d'aération consistant en des diffuseurs.

5. Produit pouvant être obtenu par le procédé défini dans les revendications 1-4.

6. Utilisation du produit pouvant être obtenu par le procédé défini dans les revendications 1-4 comme une matière première pour sa formulation et son incorporation dans des émaux, des vernis ou des frittes.

7. Utilisation du produit pouvant être obtenu par le procédé défini dans les revendications 1-4 comme une matière première pour sa formulation et son incorporation dans des pâtes céramiques.
